# EUROPEAN PATENT SPECIFICATION

(11) **EP 3 749 090 B1**
(45) Date of publication and mention of the grant of the patent: **05.03.2025**
(21) Application number: 19750674.4
(22) Date of filing: 06.02.2019
(51) Int. Cl.: A01K 97/10, B63B 7/00

(54) **FISHING ACCESSORY SUPPORT STRUCTURE FOR A BOAT**
STÜTZSTRUKTUR FÜR ANGELZUBEÖR FÜR EIN BOOT
STRUCTURE DE SUPPORT D'ACCESSOIRE DE PÊCHE POUR UN BATEAU

(30) Priority: 07.02.2018 CN 201820218048 U
(43) Date of publication of application: 16.12.2020
(73) Proprietor: Intex Marketing Ltd., Road Town, Tortola 1110 (VG)
(72) Inventor: HUANG, Zhi Xiong, Xiamen, Fujian 361022 (CN); LIN, Hai, Xiamen, Fujian 361022 (CN); CAI, Zhaowei, Xiamen, Fujian 361022 (CN); HSU, Yaw Yuan, Xiamen, Fujian 361022 (CN)
(74) Representative: Reddie & Grose LLP
(86) International application number: PCT/IB2019/050953
(87) International publication number: WO 2019/155378

(56) References cited:
- CN-U- 208 001 929
- US-A- 4 157 803
- US-A- 5 996 527
- US-A1- 2008 053 360
- US-A1- 2017 043 846

## Description

### FIELD OF THE DISCLOSURE

The present disclosure relates to fishing accessory support structures. More particularly, the present disclosure relates to adjustable fishing accessory support structures for inflatable boats, and to methods for using the same.

### BACKGROUND OF THE DISCLOSURE

Fishing rod support structures are desired to prevent fishers from having to hold their fishing rods for the entirety of their time spent fishing, thus alleviating the strain put on fishers from holding onto their fishing rods for long periods of time. Many embodiments of fishing rod support structures exist, including those that can be secured to the ground, chairs, or fishing boats. However, few embodiments exist to be secured to inflatable boats, and those that do often lack proper support. These structures are often unstable, causing the fishing rod to lean excessively or fall over when the boat rocks or flexes in the water.

### SUMMARY

US 2008/053360 discloses a boat mountable frame for mounting fishing equipment including a support rack with a horizontal member between two vertical members. The horizontal member can be cut to match the dimensions of a boat to which the support rack is to be fitted.

US 4,157,803 discloses a fishing rod holder device for a boat comprising a body which extends from gunwale to gunwale of the boat and has legs for removably mounting said body to the gunwales and including a plurality of fishing rod holders attached to said body.
US 2008/05330 discloses a support structure for a fishing accessory in a boat, the boat having a first side, a second side, a floor, and a width between the first and second sides, the support structure comprising: a support rack extending across the floor between the first side and the second side of the boat; and at least one fishing accessory mount coupled to the support rack.

The present invention provides a support structure for a fishing accessory in a boat as defined in claim 1 to which reference should now be made.

The present disclosure provides an adjustable fishing accessory support structure for an inflatable boat. The support structure may have an adjustable width to accommodate movement of the boat. The support structure may also have an adjustable lengthwise position relative to the boat to accommodate different users. The support structure may include at least one fishing accessory mount configured to support a fishing accessory, such as a fishing rod.

According to an embodiment of the present disclosure, a support structure is disclosed for a fishing accessory in a boat, the boat having a first side, a second side, a floor, and a width between the first and second sides, the support structure including a support rack extending across the floor between the first side and the second side of the boat, wherein a width of the support rack is adjustable such that the width of the support rack changes as the width of the boat changes, and at least one fishing accessory mount coupled to the support rack.

According to a non-claimed embodiment of the present disclosure, a support structure is disclosed for a fishing accessory in a boat, the boat having a first side, a second side, a floor, a width between the first and second sides, and a length, the support structure including a support rack extending across the floor between the first side and the second side of the boat, wherein the support rack is moveable between at least a forward position along the length of the boat and a rearward position along the length of the boat, and at least one fishing accessory mount coupled to the support rack.

According to another non-claimed embodiment of the present disclosure, a support structure is disclosed for a fishing accessory in a boat, the support structure including a support base coupled to a boat, the support base including a first base plate including a number of first base coupling members and a second base plate including a number of second base coupling members, a first fixing arm including a first end, a second end, and a number of first arm coupling members at the second end, wherein the first arm coupling members are configured to removably couple with the first base coupling members for coupling the first fixing arm to the first base plate, the number of first base coupling members exceeding the number of first arm coupling members, a second fixing arm including a first end, a second end, and a number of second arm coupling members at the second end, wherein the second arm coupling members are configured to removably couple with the second base coupling members for coupling the second fixing arm to the second base plate, the number of second base coupling members exceeding the number of second arm coupling members, a connecting rod including a first end and a second end, wherein the first end of the first fixing arm is adjustably coupled to the first end of the connecting rod, such that an overlap distance between the first arm end and the first end of the connecting rod is adjustable, and a locking mechanism configured to fixedly couple the first end of the second fixing arm to the second end of the connecting rod, such that an overlap distance between the first end of the second fixing arm and the second end of the connecting rod is fixed.

### BRIEF DESCRIPTION OF THE DRAWINGS

The above-mentioned and other features and advantages of this disclosure, and the manner of attaining them, will become more apparent and will be better understood by reference to the following description of embodiments of the invention taken in conjunction with the accompanying drawings, wherein:
FIG. **1** illustrates a perspective view of an inflatable boat with an exemplary fishing accessory support structure, the support structure including a support base coupled to the inflatable boat, a support rack, and a fishing rod mount coupled to the support rack;
FIG. **2** illustrates a perspective view of the inflatable boat of FIG. **1****,** illustrating the support structure without the fishing rod mount;
FIG. **3** illustrates a perspective view of the fishing rod mount coupled to the support rack of FIG. **1****;**
FIG. **4** illustrates a partially exploded, perspective view of the support structure of FIG. 3 with the fishing rod mount detached from the support rack;
FIG. **5** illustrates an exploded, perspective view of the support rack of FIG. **4****;**
FIG. **6** illustrates a partially exploded, perspective view of the support rack of FIG. 5 and the support base of FIG. **2****;**
FIG. **7** illustrates a partially exploded, perspective view of the support rack being coupled to the support base;
FIG. **8** illustrates a simplified, rear view of the support rack with a short overlap distance to accommodate a stretched boat configuration; and
FIG. **9** illustrates a simplified, rear view of the support rack with a longer overlap distance than FIG. **8** to accommodate a compacted boat configuration.

Corresponding reference characters indicate corresponding parts throughout the several views. The exemplifications set out herein illustrate exemplary embodiments of the invention and such exemplifications are not to be construed as limiting the scope of the invention in any manner.

### DETAILED DESCRIPTION

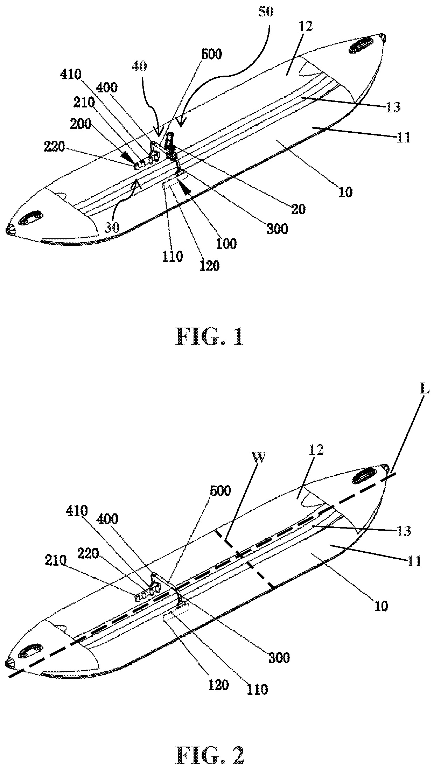

Referring to FIGS. **1-2****,** a support structure **50** with at least one fishing accessory mount is provided for supporting a corresponding fishing accessory in a boat **10.** The illustrative fishing accessory mount is a fishing rod mount **20** configured to support a user's fishing rod (not shown). The fishing accessory mount may be selectively installed, as the support structure **50** is shown with the fishing rod mount **20** (FIG. **1****)** and without the fishing rod mount **20** (FIG. **2****).** The support structure **50** may include other fishing accessory mounts, instead of or in addition to the illustrative fishing rod mount **20,** to support other fishing accessories, such as a fish finder, a depth finder, and/or a radio, for example.

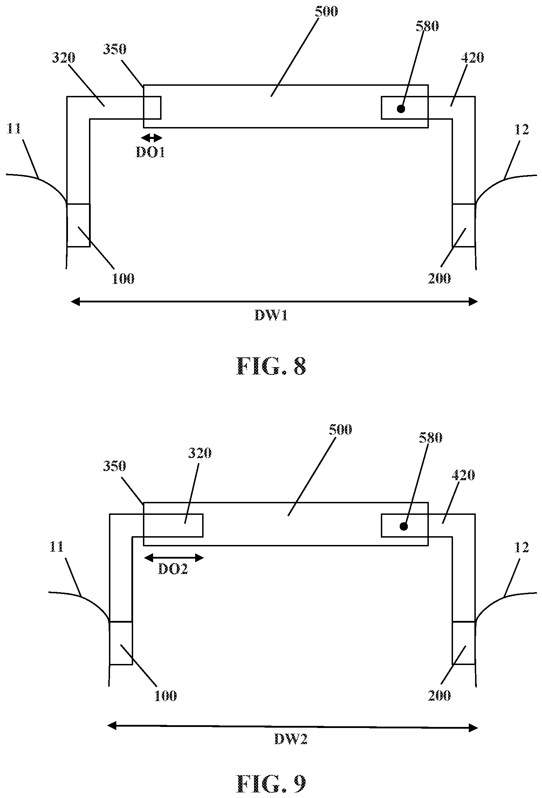

The illustrative boat **10** of FIGS. **1-2** is a kayak including a first wall **11,** a second wall **12,** and a floor **13** therebetween, and extends along a length **L,** and a width **W.** Boat **10** may be least partially inflatable and may include one or more valves (not shown) configured to selectively inflate and/or deflate first wall **11,** first wall **12,** and/or any other inflatable portions of boat **10.** Boat **10** may be made of a flexible, waterproof material, such as PVC, a waterproof coated fabric, or another suitable material. Floor **13** of boat **10,** in particular, may be sufficiently flexible to bend as boat **10** travels across uneven water. For example, floor **13** may bend upward causing boat **10** to take on a stretched configuration between walls **11, 12** (FIG. **8****),** bend downward causing boat **10** to take on a compacted configuration between walls **11, 12** (FIG. **9****),** or remain flat causing boat **10** to take on a resting configuration between walls **11, 12.** In operation, the user would sit behind the support structure **50** while facing the front of the boat **10** with his or her legs extending beneath the support structure **50** and across floor **13.**

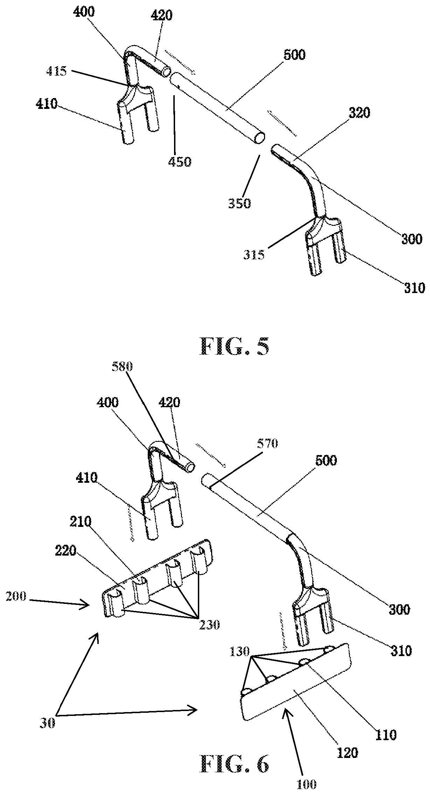

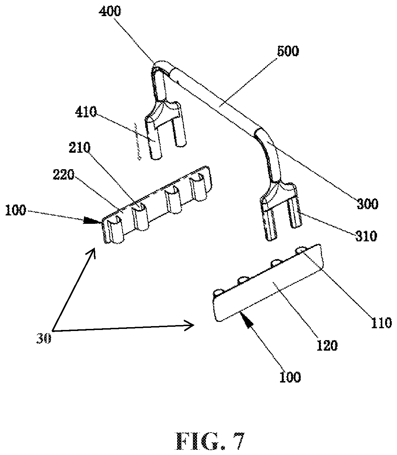

In addition to the fishing rod mount **20,** the support structure **50** comprises a support rack **40** and a support base **30.** Support rack **40** comprises a first fixing arm **300,** a second fixing arm **400,** and an intermediate connecting rod **500.** Support structure **50** is coupled to boat **10** such that connecting rod **500** lies horizontally along its longitudinal axis, at or above a height of walls **11** and **12,** and substantially parallel to floor **13.** Connecting rod **500** extends between first fixing arm **300** and second fixing arm **400.** A user's legs extend beneath connecting rod **500** when the user is seated in the boat **10** and support structure **50** is in use. Connecting rod **500** has a first end **350** and a second end **450** to receive first fixing arm **300** and second fixing arm **400,** respectively. Support base **30** comprises a first fixing base **100** and a second fixing base **200.** In the illustrated embodiment, support rack **40** can be assembled by coupling the first fixing arm **300** and the second fixing arm **400** to first and second ends **350** and **450** of the connecting rod **500,** respectively (FIG. **5****).** Support rack **40** can then be coupled to support base **30** to assemble the support structure **50** (FIG. **7****).**

In the illustrated embodiment, first fixing base **100** is coupled to the first wall **11** of the boat **10,** and second fixing base **200** is coupled to the second wall **12** of the boat **10.** First fixing base **100** and second fixing base **200** may be permanently coupled to the boat **10** via high frequency welding, adhesive, or fasteners. In other embodiments, first fixing base **100** and second fixing base **200** may be removably coupled to the boat **10** via thread gluing, press buttons, zippers, clips, latches, or other removable coupling means. Such removable coupling means would allow quick assembly and disassembly for efficient storage.

First fixing base **100** of support base **30** is spaced an appropriate distance from second fixing base **200** of support base **30** to couple with the support rack **40,** which spans across floor **13** of the boat **10.** In one embodiment, first fixing base **100** and second fixing base **200** of support base **30** are composed of PVC or some other semi-rigid material, such as another type of plastic, metal, rubber, or other rigid or semi-rigid materials. Additionally, first fixing base 100 and second fixing base **200** of support base **30** may be constructed of a waterproof material or covered in a waterproof coating. First fixing base **100** and second fixing base **200** of support base **30** may also be coated or covered with a waterproofing material to prevent damage over time or to maintain the structural integrity of support base **30.**

First fixing base **100** includes a first fixing board **120** and at least one of a first base coupling member **110.** Similarly, second fixing base **200** includes a second fixing board **220** and at least one of a second base coupling member **210.** In the illustrated embodiment, support base **30** has four first base coupling members **110** and four second base coupling members **210,** but any number of at least one first base coupling members **110** and second base coupling members **210** may be used. The first base coupling members **110** and second base coupling members **210** align across the boat **10** such that each first base coupling member **110** is across the width **W** of the boat **10** from a corresponding second base coupling member **210.** In other embodiments, first base coupling members **110** may be offset from second base coupling members **210** in order to alter the angle at which connecting rod **500** lies across floor **13** of boat **10.** In the illustrated embodiment, first and second base coupling members **110** and **210** are formed by hollow tubes **130** and **230** coupled to first fixing board **120** and second fixing board **220,** respectively. In other embodiments, base coupling members **110** and **210** may comprise protrusions coupled to first and second fixing boards **120** and **220,** grooves or holes formed directly in first fixing board **120** and second fixing board **220,** or any other means of coupling with fixing arms **300** and **400.**

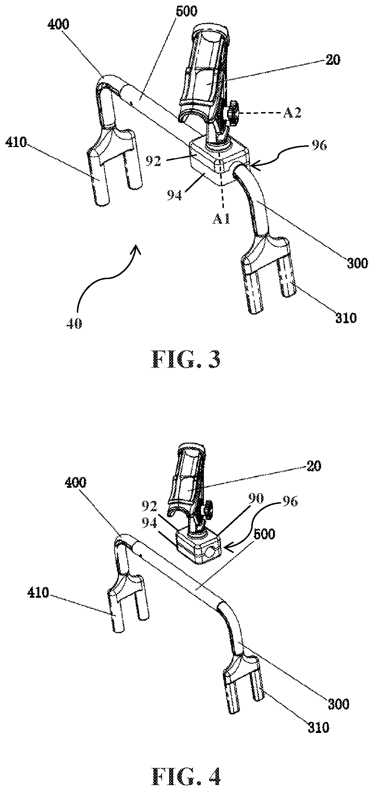

Referring to FIGS. **3-5****,** support rack **40** is shown with a fishing rod mount **20** attached to connecting rod **500** (FIG. **3****)** and with the fishing rod mount **20** detached from connecting rod **500** (FIG. **4****).** In the illustrated embodiment, first fixing arm **300** is L-shaped and comprises a first end **320** and at least one of a first arm coupling member **310** at a second end **315.** Second fixing arm **400** is L-shaped and comprises a first end **420** and at least one of a second arm coupling member **410** at a second end **415.** In other embodiments, first and second fixing arms **300** and **400** may be other shapes in order to facilitate different positions of connecting rod **500** relative to boat **10.**

First arm coupling members **310** extend vertically downward from the first end **320** of first fixing arm **300** and are designed to be removably coupled to first base coupling members **110** of first fixing base **100.** Similarly, second arm coupling members **410** extend vertically downward from the first end **420** of the second fixing arm **400** and are designed to be removably coupled to second base coupling members **210** of second fixing base **200.** It is also within the scope of the present disclosure for first fixing arm **300** and/or second fixing arm **400** to be permanently coupled to the respective first fixing base **100** and/or second fixing base **200.** In the illustrated embodiment, support rack **40** is designed such that, when assembled and coupled to the boat **10,** connecting rod **500** lies horizontally along its longitudinal axis, above floor **13** of the boat **10,** and spans between first fixing arm **300** and second fixing arm **400** across the width **W** of the boat.

In the illustrated embodiment, two first arm coupling members **310** and two second arm coupling members **410** are shown. In other embodiments, any number of at least one first arm coupling members **310** and second arm coupling members **410** may be used to removably couple first fixing arm **300** and second fixing arm **400** with first fixing base **100** and second fixing base **200,** respectively. First arm coupling members **310** and second arm coupling members **410** are spaced apart such that they can be coupled to first base coupling members **110** and second base coupling members **210,** respectively. In the illustrated embodiment, the number of first base coupling members **110** and second base coupling members **210** is greater than the number of first arm coupling members **310** and second arm coupling members **410,** respectively, in order to give the user multiple options for placement of the support rack **40** into the support base **30** and to increase support for the support rack **40.** In other embodiments, the number of first base coupling members **110** and second base coupling members **210** may be less than or equal to the number of first arm coupling members **310** and second arm coupling members **410,** respectively.

In the illustrated embodiment, fishing rod mount **20** is removably coupled to connecting rod **500** with a latching mechanism **90.** Latching mechanism **90** comprises an upper bracket **92,** a lower bracket **94,** and a hole **96** between the two brackets **92, 94** along the length of the mechanism to receive connecting rod **500.** In other embodiments, fishing rod mount **20** may be removably coupled to connecting rod **500** with screws, buttons, straps, or any other fastening means. Fishing rod mount **20** may be capable of removably supporting the user's fishing rod during use. Fishing rod mount **20** may be rotatable about one or more axes **A1, A2** so the user may move the supported fishing rod relative to the boat **10.**

Referring to FIG. **5****,** first end **320** of first fixing arm **300** is designed to couple with first end **350** of connecting rod **500.** Similarly, second end **420** of second fixing arm **400** is designed to couple with second end **450** of connecting rod **500.** In the illustrated embodiment, first fixing arm **300** is bent in an L-shape such that first end 320 of first fixing arm **300** is approximately perpendicular to second end **315** of first fixing arm **300.** Similarly, second fixing arm **400** is bent in an L-shape such that first end **420** of second fixing arm **400** is approximately perpendicular to second end **415** of second fixing arm **400.** In other embodiments, the shape of first and second fixing arms **300** and **400** can be altered to adjust the angle between first ends **320** and **420,** and second ends **315** and **415,** of first and second fixing arms **300** and **400.**

In the illustrated embodiment, connecting rod **500** has a larger diameter than the first ends **320** and **420** of first and second fixing arms **300** and **400** so that fixing arms **300** and **400** are coupled to first and second ends **350** and **450** of connecting rod **500** by inserting the first end **320** of first fixing arm **300** into first end **350** of connecting rod **500,** and inserting first end **420** of second fixing arm **400** into second end **450** of connecting rod **500.** In other embodiments, the connecting rod **500** may have a smaller diameter than first ends **320** and **420** of first and second fixing arms **300** and **400** so that the first end **350** of connecting rod **500** would be inserted into first end **320** of first fixing arm **300,** and second end **450** of connecting rod **500** would be inserted into first end **420** of second fixing arm **400.** In yet other embodiments, fixing arms **300** and **400** may be directly or indirectly coupled to connecting rod **500** by insertion, interlocking components, screws, or any other coupling means.

Referring to FIG. **5-6****,** first fixing arm **300** and second fixing arm **400** are coupled to the first and second ends **350** and **450,** respectively, of connecting rod **500.** In the illustrated embodiment, a locking mechanism is provided comprising a locking protrusion **580** (e.g., a spring-loaded locking ball) and locking slot **570** in order to secure second fixing arm **400** into connecting rod **500.** Locking slot **570** is designed to receive the locking protrusion **580.** Locking protrusion **580** can be pushed into second fixing arm **400** so that the surface of fixing arm **400** is roughly flush with the surface of the locking protrusion **580** and the first end **420** of second fixing arm **400** may slide within connecting rod **500.** Once the locking protrusion **580** reaches the locking slot **570,** the locking protrusion **580** snaps into the locking slot **570,** securing the second end **420** of fixing arm **400** into the connecting rod **500.**

In other embodiments, connecting rod **500** may include locking protrusion **580** and fixing arm **400** may include locking slot **570.** In other embodiments, the locking mechanism may comprise a screw, a lock catch and groove, a tight-fitting structure, or similar mechanism. In other embodiments, second fixing arm **400** may be fixedly coupled to second end **450** of connecting rod **500** by means that do not require a locking mechanism, including making the second fixing arm **400** and connecting rod **500** one piece. In the illustrated embodiment, first end **320** of first fixing arm **300** is not disposed with a locking mechanism and is adjustably coupled to connecting rod **500** in a telescopic manner. This adjustable coupling allows an overlap distance between first end **320** of first fixing arm **300** and connecting rod **500** to vary, allowing the width of the support structure **50** to adjust to the changing width **W** of the boat **10** as the flexible boat material bends during use.

Referring to FIG. **8-9****,** the first end **320** of first fixing arm **300** is shown at two different overlap distances with first end **350** of connecting rod **500.** A short overlap distance **DO1** (FIG. **8****)** may accommodate a stretched configuration of boat **10,** where the distance **DW1** between walls **11** and **12** is greater than the distance between walls **11** and **12** would be in a resting configuration. A long overlap distance **DO2** (FIG. **9****)** may accommodate a compacted configuration of boat **10,** wherein the distance **DW2** between walls **11** and **12** is less than the distance between walls **11** and **12** in the resting configuration. An intermediate overlap distance (not shown) between **D1** and **D2** may accommodate the resting configuration of boat **10.** Connecting rod **500,** first end **320** of first fixing arm **300,** and first end **420** of second fixing arm **400** may comprise keys and grooves or other complimentary features to better facilitate connecting the components together and inhibiting rotation between the components.

In other embodiments, first fixing arm **300** may be fixedly coupled to connecting rod **500,** and second fixing arm **400** may be adjustably coupled to connecting rod **500.** Furthermore, both first fixing arm **300** and second fixing arm **400** may be adjustably coupled to connecting rod **500.** First fixing arm **300** and second fixing arm **400** may be directly or indirectly coupled to connecting rod **500.** In still other embodiments, connecting rod **500** may be fixedly coupled to both first fixing arm **300** and second fixing arm **400** with connecting rod **500** having a telescoping section therebetween.

In the illustrated embodiment, support rack **40** is composed of PVC or some other semi-rigid material, such as another type of plastic, metal, hard rubber, or any other rigid or semi-rigid material. Furthermore, support rack **40** may be composed of waterproof material or covered in a waterproof coating to prevent damage over time or to maintain the structural integrity of the support rack **40.**

Referencing FIG. **6-7****,** support rack **40** is removably coupled to the support base **30** by coupling first arm coupling members **310** to first base coupling members **110** and second arm coupling members **410** to second base coupling members **210.** For embodiments in which the number of first arm coupling members **310** and second arm coupling members **410** are less than the number of first base coupling members **110** and second base coupling members **210,** support rack **40** may be coupled to a plurality of different corresponding positions, such as a forward position in the two forward-most base coupling members **110, 210,** an intermediate position in the two middle base coupling members **110, 210,** or a rearward position in the two rearward-most base coupling members **110, 210.** Such embodiments provide multiple options for coupling the support rack **40** to the support base **30** to accommodate different users.

In the illustrated embodiment, arm coupling members **310** and **410** are protrusions and base coupling members **110** and **210** are slots, where arm coupling members **310** and **410** are inserted into base coupling members **110** and **210.** In other embodiments, arm coupling members **310** and **410** may be slots, grooves, holes, or any other removable coupling means, and base coupling members **110** and **210** may be protrusions, grooves, holes, or any other removable coupling means.

While this invention has been described as having exemplary designs, the present invention can be further modified within the scope of the appended claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A support structure (50) for a fishing accessory in a boat (10), the boat having a first side (11), a second side (12), a floor (13), and a width between the first and second sides, the support structure comprising:
a support rack (40) comprising a first fixing arm (300), a second fixing arm (400), and a connecting rod (500), the support rack (40) extending across the floor between the first side and the second side of the boat when the support structure is coupled to a boat, wherein a width of the support rack is adjustable such that the width of the support rack changes as the width between the first and second sides of the boat changes;
a support base (30) comprising: a first base plate (100) for coupling to the first side (11) of the boat and the first fixing arm (300); and a second base plate (200) for coupling to the second side (12) of the boat and the second fixing arm (400),
at least one fishing accessory mount (20) coupled to the support rack (40),
wherein the first fixing arm is adjustably coupled to a first end of the connecting rod and the second fixing arm is coupled to a second end of the connecting rod, whereby an overlap distance between the first fixing arm and the first end of the connecting rod is adjustable to adjust the width of the support rack (40),
said support structure being **characterized in that** the support base further comprises a number of base coupling members (110, 210) and each of the first and second fixing arms (300, 400) comprises a number of arm coupling members (310, 410), such that the first and second fixing arms are removably coupled to the support base through the base coupling members and the arm coupling members.

2. The support structure of claim **1,** wherein the fishing accessory mount (20) is removably coupled to the connecting rod (500) through a latching mechanism (90), the latching mechanism comprising an upper bracket (92), a lower bracket (94), and a hole (96) between the upper bracket and the lower bracket along a length of the latching mechanism to receive the connecting rod.

3. The support structure of claim **1,** wherein the number of base coupling members (110, 210) is greater than the number of arm coupling members (310, 410).

4. The support structure of claim 1, further comprising a locking mechanism (570, 580) that fixedly couples the second fixing arm (400) to the second end of the connecting rod such that an overlap distance between the second fixing arm (400) and the second end of the connecting rod (500) is fixed.

5. The support structure of claim **1,** wherein the at least one fishing accessory mount (20) is a fishing rod mount configured to support a fishing rod, the fishing rod mount having at least one axis of rotation relative to the boat when coupled to a boat.

6. The support structure of claim 1,
wherein the support rack (40) is moveable between at least a forward position along the length of a boat (10) and a rearward position along the length of the boat when the support structure is coupled to a boat.

7. The support structure of claim 6, wherein the support rack (40) is also moveable to an intermediate position between the forward and rearward positions.

8. The support structure (50) of claim 6, wherein:
the support rack (40) comprises:
a first fixing arm (300) having a first end (320) and a second end with at least one first arm coupling member (310);
a second fixing arm (400) having a first end (420) and a second end with at least one second arm coupling member (410); and
a connecting rod (500) having a first end coupled to the first end (320) of the first fixing arm (300) and a second end coupled to the first end (420) of the second fixing arm (400), the connecting rod extending across the floor of the boat and substantially parallel to the width between the first (11) and second sides of the boat (12), when coupled to a boat; and
the support base (30) comprises:
a first base plate (100) for coupling to the first side of the boat and having a plurality of first base coupling members (110) for arranging along the length of the boat and removably coupled to the at least one first arm coupling member (310), wherein the number of first base coupling members (110) exceeds the number of first arm coupling members (310); and
a second base plate (200) for coupling to the second side of the boat and having a plurality of second base coupling members (210) for arranging along the length of the boat and removably coupled to the at least one second arm coupling member (410), wherein the number of second base coupling members (210) exceeds the number of second arm coupling members (410).

9. The support structure of claim 8, wherein the first end (420) of the second fixing arm is fixedly coupled to the second end of the connecting rod (500), such that an overlap distance between the first end of the second fixing arm (400) and the second end of the connecting rod (500) is fixed.

10. The support structure of claim 8, wherein the first and second fixing arms (300, 400) are L-shaped, such that the first end (320) of the first fixing arm and the first end (420) of the second fixing arm extend substantially parallel to the width between the first (11) and second sides (12) of the boat (10), and the first and second arm coupling members (310, 410) extend vertically relative to the floor (13) of the boat, when the support structure is coupled to a boat.

## Patentansprüche

1. Trägerkonstruktion (50) für ein Angelzubehör in einem Boot (10), wobei das Boot eine erste Seite (11), eine zweite Seite (12), einen Boden (13) und eine Breite zwischen der ersten und der zweiten Seite hat, wobei die Trägerkonstruktion aufweist:
ein Trägergestell (40), das einen ersten Befestigungsarm (300), einen zweiten Befestigungsarm (400) und eine Verbindungsstange (500) aufweist, wobei, wenn die Trägerkonstruktion mit einem Boot gekoppelt ist, das Trägergestell (40) sich über den Boden zwischen der ersten Seite und der zweiten Seite des Boots erstreckt, wobei eine Breite des Trägergestells einstellbar ist, so dass sich die Breite des Trägergestells ändert, wenn sich die Breite zwischen der ersten und der zweiten Seite des Boots ändert;
eine Trägerbasis (30), die aufweist: eine erste Basisplatte (100) zum Koppeln mit der ersten Seite (11) des Boots und dem ersten Befestigungsarm (300); und eine zweite Basisplatte (200) zum Koppeln mit der zweiten Seite (12) des Boots und dem zweiten Befestigungsarm (400),
und
mindestens eine Angelzubehörhalterung (20), die mit dem Trägergestell (40) gekoppelt ist,
wobei der erste Befestigungsarm einstellbar mit einem ersten Ende der Verbindungsstange gekoppelt ist und der zweite Befestigungsarm mit einem zweiten Ende der Verbindungsstange gekoppelt ist, wodurch ein Überlappungsabstand zwischen dem ersten Befestigungsarm und dem ersten Ende der Verbindungsstange einstellbar ist, um die Breite des Trägergestells (40) einzustellen, wobei die genannte Trägerkonstruktion **dadurch gekennzeichnet ist, dass** die Trägerbasis ferner eine Anzahl von Basiskopplungselementen (110, 210) aufweist und der erste und der zweite Befestigungsarm (300, 400) jeweils eine Anzahl von Armkopplungselementen (310, 410) aufweisen, so dass der erste und der zweite Befestigungsarm durch die Basiskopplungselemente und die Armkopplungselemente abnehmbar mit der Trägerbasis gekoppelt sind.

2. Trägerkonstruktion nach Anspruch 1, wobei die
Angelzubehörhalterung (20) durch einen Arretierungsmechanismus (90) abnehmbar mit der Verbindungsstange (500) gekoppelt ist, wobei der Arretierungsmechanismus einen oberen Halter (92), einen unteren Halter (94) und ein Loch (96) zwischen dem oberen Halter und dem unteren Halter entlang einer Länge des Arretierungsmechanismus zum Aufnehmen der Verbindungsstange aufweist.

3. Trägerkonstruktion nach Anspruch 1, wobei die Anzahl von Basiskopplungselementen (110, 210) größer ist als die Anzahl von Armkopplungselementen (310, 410).

4. Trägerkonstruktion nach Anspruch 1, die ferner einen Rastmechanismus (570, 580) aufweist, der den zweiten Befestigungsarm (400) fest mit dem zweiten Ende der Verbindungsstange koppelt, so dass ein Überlappungsabstand zwischen dem zweiten Befestigungsarm (400) und dem zweiten Ende der Verbindungsstange (500) fest ist.

5. Trägerkonstruktion nach Anspruch 1, wobei die mindestens eine
Angelzubehörhalterung (20) eine Angelrutenhalterung ist, die zum Tragen einer Angelrute gestaltet ist, wobei die Angelrutenhalterung, wenn sie mit einem Boot gekoppelt ist, mindestens eine Drehachse relativ zum Boot hat.

6. Trägerkonstruktion nach Anspruch 1,
wobei das Trägergestell (40), wenn die Trägerkonstruktion mit einem Boot gekoppelt ist, zwischen mindestens einer vorderen Position entlang der Länge eines Boots (10) und einer hinteren Position entlang der Länge des Boots bewegbar ist.

7. Trägerkonstruktion nach Anspruch 6, wobei das Trägergestell (40) auch auf eine Zwischenposition zwischen der vorderen und der hinteren Position bewegbar ist.

8. Trägerkonstruktion (50) nach Anspruch 6, wobei:
das Trägergestell (40) aufweist:
einen ersten Befestigungsarm (300) mit einem ersten Ende (320) und einem zweiten Ende mit mindestens einem ersten Armkopplungselement (310);
einen zweiten Befestigungsarm (400) mit einem ersten Ende (420) und einem zweiten Ende mit mindestens einem zweiten Armkopplungselement (410); und
eine Verbindungsstange (500) mit einem ersten Ende, das mit dem ersten Ende (320) des ersten Befestigungsarms (300) gekoppelt ist, und einem zweiten Ende, das mit dem ersten Ende (420) des zweiten Befestigungsarms (400) gekoppelt ist, wobei die Verbindungsstange sich über den Boden des Boots und im Wesentlichen parallel zur Breite zwischen der ersten (11) und der zweiten Seite des Boots (12) erstreckt, wenn sie mit einem Boot gekoppelt ist; und
die Trägerbasis (30) aufweist:
eine erste Basisplatte (100) zum Koppeln mit der ersten Seite des Boots und mit einer Vielzahl von ersten Basiskopplungselementen (110) zum Anordnen entlang der Länge des Boots und die abnehmbar mit dem mindestens einen ersten Armkopplungselement (310) gekoppelt ist, wobei die Anzahl von ersten Basiskopplungselementen (110) die Anzahl von ersten Armkopplungselementen (310) übersteigt; und
eine zweite Basisplatte (100) zum Koppeln mit der zweiten Seite des Boots und mit einer Vielzahl von zweiten Basiskopplungselementen (210) zum Anordnen entlang der Länge des Boots und die abnehmbar mit dem mindestens einen zweiten Armkopplungselement (410) gekoppelt ist, wobei die Anzahl von zweiten Basiskopplungselementen (210) die Anzahl von ersten Armkopplungselementen (410) übersteigt.

9. Trägerkonstruktion nach Anspruch 8, wobei das erste Ende (420) des zweiten Befestigungsarms fest mit dem zweiten Ende der Verbindungsstange (500) gekoppelt ist, so dass ein Überlappungsabstand zwischen dem ersten Ende des zweiten Befestigungsarms (400) und dem zweiten Ende der Verbindungsstange (500) fest ist.

10. Trägerkonstruktion nach Anspruch 8, wobei der erste und der zweite Befestigungsarm (300, 400) L-förmig sind, so dass das erste Ende (320) des ersten Befestigungsarms und das erste Ende (420) des zweiten Befestigungsarms sich im Wesentlichen parallel zur Breite zwischen der ersten (11) und der zweiten Seite (12) des Boots (10) erstrecken und das erste und das zweite Armkopplungselement (310, 410) sich vertikal relativ zum Boden (13) des Boots erstrecken, wenn die Trägerkonstruktion mit einem Boot gekoppelt ist.

## Revendications

1. Structure de support (50) pour un accessoire de pêche dans un bateau (10), le bateau présentant un premier côté (11), un second côté (12), un plancher (13) et une largeur entre les premier et second côtés, la structure de support comprenant :
un étrier de support (40) comprenant un premier bras de fixation (300), un second bras de fixation (400) et une bielle (500), l'étrier de support (40) s'étendant en travers du plancher entre le premier côté et le second côté du bateau lorsque la structure de support est accouplée à un bateau, dans lequel une largeur de l'étrier de support est réglable de telle sorte que la largeur de l'étrier de support change lorsque la largeur entre les premier et second côtés du bateau change ;
une base de support (30) comprenant : une première plaque de base (100) destinée à être accouplée au premier côté (11) du bateau et au premier bras de fixation (300) ; et une seconde plaque de base (200) destinée à être accouplée au second côté (12) du bateau et au second bras de fixation (400), et
au moins un support d'accessoire de pêche (20) accouplé à l'étrier de support (40),
dans lequel le premier bras de fixation est accouplé de manière réglable à une première extrémité de la bielle et le second bras de fixation est accouplé à une seconde extrémité de la bielle, moyennant quoi une distance de chevauchement entre le premier bras de fixation et la première extrémité de la bielle est réglable pour régler la largeur de l'étrier de support (40), ladite structure de support étant **caractérisée en ce que** la base de support comprend en outre un nombre d'éléments d'accouplement de base (110, 210) et chacun des premier et second bras de fixation (300 ,400) comprend un nombre d'éléments d'accouplement de bras (310, 410), de telle sorte que les premier et second bras de fixation soient accouplés de manière amovible à la base de support par le biais des éléments d'accouplement de base et des éléments d'accouplement de bras.

2. Structure de support selon la revendication 1, dans laquelle le support d'accessoire de pêche (20) est accouplé de manière amovible à la bielle (500) par l'intermédiaire d'un mécanisme de verrouillage (90), le mécanisme de verrouillage comprenant un support supérieur (92), un support inférieur (94) et un trou (96) entre le support supérieur et le support inférieur le long d'une longueur du mécanisme de verrouillage pour recevoir la bielle.

3. Structure de support selon la revendication 1, dans laquelle le nombre d'éléments d'accouplement de base (110, 210) est supérieur au nombre d'éléments d'accouplement de bras (310, 410).

4. Structure de support selon la revendication 1, comprenant en outre un mécanisme de verrouillage (570, 580) qui accouple de manière fixe le second bras de fixation (400) à la seconde extrémité de la bielle, de telle sorte qu'une distance de chevauchement entre le second bras de fixation (400) et la seconde extrémité de la bielle (500) soit fixe.

5. Structure de support selon la revendication 1, dans laquelle l'au moins une monture d'accessoire de pêche (20) est une monture de canne à pêche configurée pour supporter une canne à pêche, la monture de canne à pêche présentant au moins un axe de rotation relativement au bateau lorsqu'elle est accouplée à un bateau.

6. Structure de support selon la revendication 1,
dans lequel l'étrier de support (40) est mobile entre au moins une position avant le long de la longueur d'un bateau (10) et une position arrière le long de la longueur du bateau lorsque la structure de support est accouplée à un bateau.

7. Structure de support selon la revendication 6, dans laquelle l'étrier de support (40) peut également être déplacé jusqu'à une position intermédiaire entre les positions avant et arrière.

8. Structure de support (50) selon la revendication 6, dans laquelle :
l'étrier de support (40) comprend :
un premier bras de fixation (300) présentant une première extrémité (320) et une seconde extrémité présentant au moins un premier élément d'accouplement de bras (310) ;
un second bras de fixation (400) présentant une première extrémité (420) et une seconde extrémité présentant au moins un deuxième élément d'accouplement de bras (410) ; et
une bielle (500) présentant une première extrémité accouplée à la première extrémité (320) du premier bras de fixation (300) et une seconde extrémité accouplée à la première extrémité (420) du second bras de fixation (400), la bielle s'étendant en travers du plancher du bateau et sensiblement parallèlement à la largeur entre les premier (11) et second (12) côtés du bateau, lorsqu'elle est accouplée à un bateau ; et
la base de support (30) comprend :
une première plaque de base (100) destinée à être accouplée au premier côté du bateau et présentant une pluralité de premiers éléments d'accouplement de base (110) à disposer le long de la longueur du bateau et accouplés de manière amovible à l'au moins un premier élément d'accouplement de bras (310), dans lequel le nombre de premiers éléments d'accouplement de base (110) dépasse le nombre de premiers éléments d'accouplement de bras (310) ; et
une seconde plaque de base (200) destinée à être accouplée au second côté du bateau et présentant une pluralité de deuxièmes éléments d'accouplement de base (210) à disposer le long de la longueur du bateau et accouplés de manière amovible à l'au moins un deuxième élément d'accouplement de bras (410), le nombre de deuxièmes éléments d'accouplement de base (210) dépassant le nombre de deuxièmes éléments d'accouplement de bras (410).

9. Structure de support selon la revendication 8, dans laquelle la première extrémité (420) du second bras de fixation est accouplée de manière fixe à la seconde extrémité de la bielle (500), de telle sorte qu'une distance de chevauchement entre la première extrémité du second bras de fixation (400) et la seconde extrémité de la bielle (500) soit fixe.

10. Structure de support selon la revendication 8, dans laquelle les premier et second bras de fixation (300, 400) sont en forme de L, de telle sorte que la première extrémité (320) du premier bras de fixation et la première extrémité (420) du second bras de fixation s'étendent sensiblement parallèlement à la largeur entre les premier (11) et second (12) côtés du bateau (10), et les premier et second bras d'accouplement (310, 410) s'étendent verticalement par rapport au plancher (13) du bateau, lorsque la structure de support est accouplée à un bateau.
